# EUROPEAN PATENT APPLICATION

(11) **EP 4 186 962 A1**
(43) Date of publication of application: **31.05.2023**
(21) Application number: 21210244.6
(22) Date of filing: 24.11.2021
(51) Int. Cl.: C10G 3/00, C10G 1/06, C10G 31/06, C10G 31/08, B01J 10/00, B01J 19/26, B01J 19/18

(54) **PROCESS AND APPARATUS FOR PRODUCING A CRUDE OIL PRECURSOR AND CRUDE OIL FROM ORGANIC WASTE**

(71) Applicant: DeSoonZero, Dubai (AE)
(72) Inventor: Alowais, Ali, Dubai (AE)
(74) Representative: Zanoli, Enrico

(57) **Abstract**

The invention relates to a process and an apparatus for producing a precursor of crude oil and crude oil from organic waste. The waste is heated at a temperature from 40 to 80°C in a precursor production tank and continuously mixed with a stream of hot combustion gas. A layer of hydrocarbonaceus active material, which is a precursor of crude oil, is formed and fed to a crude oil production tank where it is mixed with a fresh stream of organic waste and heated at a temperature from 60 to 180°C, whereby the organic waste and the hydrocarbonaceus active material are converted into crude oil.

## Description

The present invention relates to a process and an apparatus for producing a precursor of crude oil and crude oil from organic waste.

### Background of the invention

With the increase in world population and urban development, there are huge amounts of organic waste that are generated. Treatment of this waste is becoming an increasing challenge. Methods of treatment such as incineration increase the emission of greenhouse gases and cause pollution of water sources and soil, adding to the contamination already caused by other waste sources.

As to treatment of sewage, several processes are implemented, and improvements are being developed to provide efficient and cost-effective treatments. Most of the technologies applied today include several processes steps, such as dewatering, composting, incineration, pathogen destruction, conditioning, and stabilization (physical, chemical, or biological) which renders the process costly.

Typically, the processes applied depend on the intended use of the output; most are focused on converting the sewer biomass into fertilizer, which provides value back into the communities they serve.

Recently, there have been developments to include energy capturing from the process to reduce the net effect of the energy consumed for the treatment process. For example, use of superheated steam to dry the sewage has been introduced, as well as treatments under pressure to pyrolyze the solid content and reduce the waste volume and weight.

The patent literature describes several processes to treat organic waste and biomass.

US 2005/0108928 A1 discloses a process for producing soil mediums or fuel mediums from organic waste or sludges. The process ensures a mass reduction by a 5 to 1 ratio. The obtained soil fuel mediums appear to be a solid material.

US 2012/0167453 A1 discloses a method for producing crude oil from biomass by direct liquefaction under atmospheric pressure, comprising introducing a dried biomass into a reactor containing heavy oil to form a sump oil phase, condensing and collecting the volatile reaction product, and isolating and collecting a crude oil.

The prior art processes, however, do not provide an optimal solution to the problem of converting any kind of biomass or organic material into crude oil by means of a simple and effective process.

Therefore, an object of the present invention is to provide an effective, simple and non-expensive process for producing a precursor of crude oil and that promotes the conversion of organic waste into crude oil.

Another object of the invention is to provide an effective, simple and non-expensive process for producing crude oil from organic waste by using a precursor of crude oil also produced from organic waste.

A further object of the invention is an apparatus for carrying out such processes.

### Summary of the invention

A first aspect of the present invention concerns a process for producing a hydrocarbonaceus active material that is a precursor of crude oil from organic waste, comprising:
a) feeding a mixture of organic waste and water into a precursor production tank and heating said mixture at a temperature from 40 to 80°C, whereby a dispersion of organic matter in water is formed;
b) withdrawing a part of said dispersion from said precursor production tank and feeding it to a gas-liquid mixer;
c) feeding a stream of combustion gas at a temperature of from 80 to 200°C into said gas-liquid mixer and mixing it with said dispersion of organic matter in water, whereby said combustion gas and said organic matter are allowed to react;
d) recycling said dispersion of organic matter in water and the product of said reaction with said combustion gas into said precursor production tank, wherein a floating layer of hydrocarbonaceus active material is formed above said water; and optionally collecting said hydrocarbonaceus active material in a storage tank.

A second aspect of the present invention concerns a process for producing crude oil from organic waste by using a hydrocarbonaceus active material produced according to the process defined in steps from a) to d) above, said process comprising:
e) withdrawing said hydrocarbonaceus material from said precursor production tank or from said storage tank, and feeding it to a crude oil production tank, wherein said hydrocarbonaceus active material is mixed with a fresh organic waste and water;
f) heating said mixture of said hydrocarbonaceus active material and said fresh organic waste and water at a temperature from 60 to 180°C, whereby said mixture of hydrocarbonaceus active material and said fresh organic waste in water are converted into crude oil.

The process for producing the hydrocarbonaceus active material that is a precursor of crude oil and the process for producing crude oil from organic waste by using said hydrocarbonaceus active material can be implemented separately or jointly. In the first case the hydrocarbonaceus active material is collected in a storage tank and stored in it until it is withdrawn and used for the production of crude oil. In the second case, the hydrocarbonaceus active material is directly fed to a crude oil production tank.

Another aspect of the present invention concerns the apparatus for carrying out the process for producing a precursor of crude oil from organic waste and crude oil using said precursor, comprising:
i. a precursor production tank provided with an inlet for introducing organic waste and water; an outlet for a dispersion of organic waste in water; pumping means for said dispersion of organic waste in water; an inlet for recycling said dispersion of organic waste in water; a line for withdrawing a layer of hydrocarbonaceus active material; heating means, and a discharge port;
ii. a gas-liquid mixer associated to said precursor production tank, connected to a line for introducing said dispersion of organic waste in water, and spray nozzles to spray said dispersion of organic waste in water into said gas-liquid mixer; and an inlet for a gas stream;
iii. a crude oil production tank with an inlet for entering a fresh dispersion of organic waste in water; an inlet for introducing said a layer of hydrocarbonaceus active material withdrawn from said precursor production tank; mixing means; heating means; and a discharge port for a crude oil formed in said second conversion tank.

### Brief description of the figures

The invention will now be described also with reference to Figures 1-5, in which:
- Fig. 1, which is a schematic view of the process and the apparatus according to the invention;
- Fig. 2 is picture of a raw material used in Example 3.

### Description of the invention

In the present description the term "organic waste" means any organic material that comes from a plant or an animal, or that is a plastic material. All businesses that produce organic waste, including plastic materials, may be subject to complying with organic recycling, depending on applicable law. A large part of organic waste is biodegradable, i.e., is an organic material that can be broken down into carbon dioxide, methane and water. Examples of organic waste include green waste, food waste, food-soiled paper, wood waste, landscape and pruning waste. When organic waste is dumped in landfills, it undergoes anaerobic decomposition (due to the lack of oxygen) and produces methane. When released into the atmosphere, methane is twenty times more potent a greenhouse gas than carbon dioxide.

A typical organic waste is sewage, which contains organic waste dispersed in water. Therefore, according to the present invention, sewage is *per se* a mixture of organic waste and water.

Plastic waste is an organic waste that can be processed according to the present invention.

If an organic waste to be treated in the process of the invention is a solid that does not contain sufficient water to be processed in the process of the invention, it must be mixed with water to form a mixture of organic waste and water that is processable in the process of the invention. Any kind of water can be used to be mixed with the organic waste, including sea water. Inorganic material, metals, glass and the like, if present, are removed from the organic waste before it is processed according to the invention. Preliminary treatments of waste to eliminate non organic components are not part of the process of the invention and are not described here.

A first aspect of the invention concerns the production of a hydrocarbonaceus active material that is a precursor of the crude oil and that, when mixed with fresh organic waste, promotes the conversion of the waste into crude oil.

### Step a)

In step a) a mixture of organic waste and water 5 is fed into a precursor production tank 10 via inlet 7. The mixture can be a sewage from an urban sewage network, or any other organic waste in the in the presence of water. If the mixture is not in the form of a conveyable fluid, the solid part and the water are introduced separately.

The precursor production tank 10 is provided with heating means 6, symbolized as a fire but implemented as any heating means used in the industry, such as electric heating, thermostatic jacket, and the like. Conversion tank 10 is heated at a temperature from 40 to 80°C, preferably from 45 to 70°C, more preferably from 50 to 60°C. A dispersion containing organic matter in water is formed.

The precursor production tank 10 is provided with an outlet 12 for withdrawing a part of the dispersion of organic matter in water. Precursor production tank 10 is provided also with a system, not shown, to withdraw solid or semi-solid deposited on the bottom.

### Step b)

In step b) a part of the dispersion is withdrawn from precursor production tank 10 and fed to a gas-liquid mixer 18 through a line 14 by pumping means 9. The dispersion is introduced in the gas-liquid mixer 18 through spray nozzles 16. A filter 8 placed upstream the pumping means 9 to separate coarse material contained in the dispersion and avoid clogging of the spray nozzles 16.

### Step c)

According to step c), a stream of combustion gas 20 is also introduced into the gas-liquid mixer 18 and is mixed with the dispersion containing organic matter. The stream of combustion gas 20 are generated by burning a fossil fuel not shown, e.g., gasoline, diesel fuel or coal. Typically, the stream of combustion gas 20 is a stream of exhaust fumes of an engine or of a boiler, and are hot fumes at a temperature of 400-600°C. Typical components of exhaust fumes are nitrogen, carbon dioxide and water. Depending on the type of combustion and possible treatment of exhaust gases, beside nitrogen, carbon dioxide and water, combustion gas 20 contains also particulate matter, volatile organic compounds (VOCs), nitrogen oxide (NOx), carbon monoxide, sulphur dioxide, and other carbon-based substances. Before being introduced in the gas-liquid mixer 18, the stream of combustion gas 20 is cooled in a cooler 22 comprising a water-cooled jacket 24 in which water contained in a tank 26 is circulated by pumping means 28. Therefore, the hot fumes at a temperature of 400-600°C are cooled to a temperature of 80-200°C, preferably 90-180°C, more preferably 100-150°C, and at this temperature enter the gas-liquid mixer 18.

Upon mixing with the stream of combustion gas 20, the dispersion of organic matter in water reacts with the combustion gas and forms a hydrocarbonaceus active material 30. As it will be described in the following, the hydrocarbonaceus active material 30 is a precursor of the crude oil and will be mixed with fresh organic waste to promote the conversion into crude oil of both the organic waste and the hydrocarbonaceus active material. For this reason, tank 10 is designated as "precursor production tank".

### Step d)

In step d) the hydrocarbonaceus active material and the remaining dispersion of unreacted organic matter in water are recycled to the precursor production tank 10.

The withdrawal of a part of the dispersion from tank 10 according to step a), the mixing with the combustion gas 20 according to steps b) and c), and the recycling of the obtained dispersion to the tank 10 according to step d) is repeatedly carried out as a continuous operation.

According to an embodiment of the invention, the operation of withdrawing the dispersion, mixing it with the combustion gas 20 and recycling the product to the conversion tank 10 of steps a), b) and c) is carried out for a time of from 3 to 30 minutes, preferably from 5 to 20 minutes.

According to an embodiment of the invention, the part of dispersion of organic matter in water that is withdrawn from tank 10 is from 1:20 to 1:2 of the amount of water dispersion contained in tank 10, preferably from 1:10 to 1:3 of the amount of dispersion contained in tank 10.

The result of repeated mixing of the dispersion of organic matter in water with the combustion gas 20 and recycling back to the first conversion tank 10 is the formation of a layer of hydrocarbonaceus active material 30 in the form of a light fluid floating above the surface of purified water, and the formation of solid particles of tar 32, suspended in the water phase or deposited on the bottom of tank 10. Purified water can be drained via discharge port 34.

The hydrocarbonaceus active material 30 in form of light fluid is withdrawn from tank 10 via a line 36. Since this fluid 30 is a fuel, a part of it can be used to heat the tank 10, as shown by line 38. The large part of this fluid 30, or its entirety if heating means 6 do not use fluid 30, is either collected in a storage tank 38 or is directly conveyed to a crude oil production tank 40. In the first case, the hydrocarbonaceus active material 30 is conveyed to the storage tank 38 via a line 37, and can be kept in the storage tank 38 for an undefined amount of time, without losing its activity as promoter of the conversion of organic waste into crude oil.

Since the hydrocarbonaceus active material 30 is a fuel, a part of it can be used to heat the tank 10, as shown by line 37'. The large part of this fluid 30, or its entirety if heating means 6 do not use fluid 30, is conveyed to the storage tank 38 or conveyed to the crude oil production tank 40, as described in the following.

According to a second aspect of the present invention, the hydrocarbonaceus active material 30 produced according to the process defined in steps from a) to d) above, is used to promote the conversion of organic waste into crude oil.

This process can be implemented separately from the process for producing the hydrocarbonaceus active material, or jointly.

In the first case, the hydrocarbonaceus active material is withdrawn from the storage tank 38 via the line 39, and in the second case can be either directly fed to a crude oil production tank 40 from line 36', or again transferred to storage tank 38 and from this fed to the crude oil production tank 40. Line 36 is represented as a discontinuous line to emphasize the possibility of a functional and spatial separation of the two parts of the apparatus, one used for the production of the hydrocarbonaceus active material in tank 10, and the other used for the production of the crude oil, in tank 40.

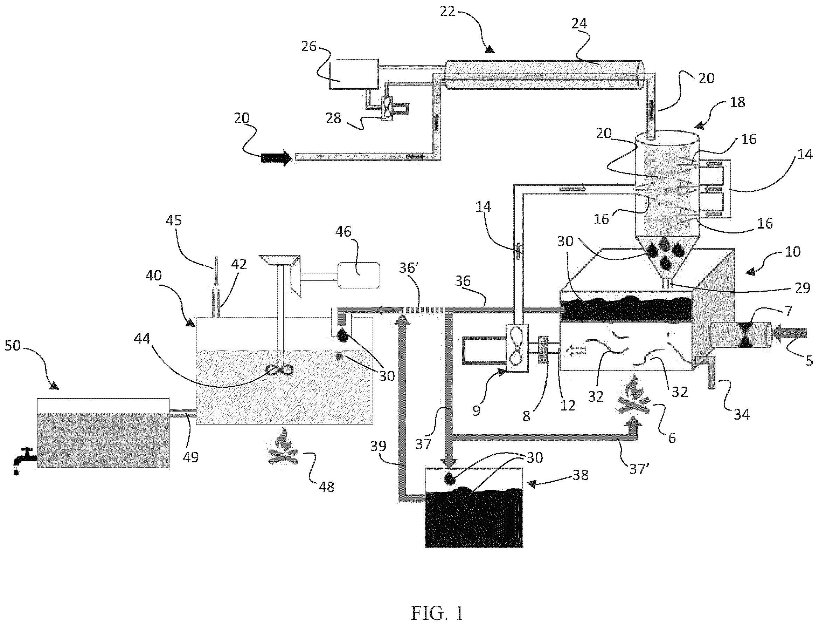

It is noted that when the process for the production of the hydrocarbonaceus active material 30 is implemented separately from the process for producing the crude oil, these two parts of the apparatus can be spaced apart, and even located in two different sites. Therefore, the hydrocarbonaceus active material 30 is transported to the site of production of the crude oil and kept in another storage tank, not shown in Fig. 1, to be available for the production of crude oil.

On the contrary, when the process for the production of the hydrocarbonaceus active material 30 is implemented jointly with the process for producing crude oil, the two parts of the apparatus can be advantageously directly connected by line 36', or, if preferred, the hydrocarbonaceus active material 30 can be conveyed in storage tank 38 and continuously withdrawn from it via line 39 and fed to the tank 40 for the production of crude oil.

### The process to produce crude oil comprises the following steps:

### Step e)

The fluid formed of hydrocarbonaceus active material 30 is supplied from a storage tank or directly from line 36' and conveyed to a crude oil production tank 40.

### Step f)

Step f) of the process of the invention is carried as follows.

In the crude oil production tank 40 the hydrocarbonaceus active material 30 is mixed with fresh organic waste and water 45, introduced via an inlet 42. The mixture includes also the solid particles of tar 32 and any organic material separated by filtering means 8. If the mixture is not in the form of a conveyable fluid, the solid part and the water are introduced separately. The mixture of hydrocarbonaceus active material 30 and organic waste 45 is mixed by agitator means 44 actuated by motor means 46, and heated by heating means 48. The temperature at which the crude oil production tank 40 is operated is from 60 to 180°C, preferably from 70 to 150°C, more preferably from 80 to 130°C.

The amount of hydrocarbonaceus active material 30 introduced in the crude oil production tank 40 is from 1 to 10% by volume, preferably from 2 to 8% by volume, more preferably from 3 to 6% by volume, of the total fresh organic waste in water 45.

According to an embodiment of step f), the speed of the agitator 44 is from 10 to 20 rpm.

According to an embodiment of step f), the minimum residence time of the mixture of hydrocarbonaceus active material 30 and organic waste 45 in the crude oil production tank is of 4 minutes. Under these conditions the mixture of hydrocarbonaceus active material and fresh stream of organic waste in water is homogenized and converted into crude oil. The hydrocarbonaceus material is defined as "active" since it actively promotes the conversion of organic waste into crude oil. It is also defined as a "precursor" since it is also converted into crude oil in the reaction with organic waste.

### Optional Step g)

According to an optional step g), the crude oil is then transferred to a cooling tank 50, where it is allowed to cool down at ambient temperature.

An analysis of the obtained product showed the typical composition of mineral crude oil, with variations depending on factors such as: the percentage of hydrocarbonaceus active material on the total organic waste; the type of organic waste; and, if water was added to the organic waste, the type of water, e.g., sea water, brackish water or fresh water.

In the embodiment in which the organic waste, other than sewage, is a solid that as such does not contain sufficient water to become a fluid that can be processed in the precursor production tank, as described above, the organic waste is mixed with water to form a mixture of organic waste and water at a ratio of 0.8:1.2, preferably at a ratio of 1:1. Examples of solids that do not contain sufficient water are green waste, food waste, wood waste, landscape and pruning waste, animal carcasses, rawhide, hair, bones, slaughterhouse waste, plastic particles. The process described above can be carried out batch-wise or continuously.

When carried out batch-wise, the precursor production tank 10 is filled with the mixture of organic waste and water 5, then inlet 7 is closed. A part from the treatment in the gas-liquid mixer and the recycling to the precursor production tank, no other material is removed from the precursor production tank. The mixture is treated for the time required and then transferred to the crude oil production tank 40.

When carried out continuously, the precursor production tank 10 is continuously fed with an amount filled with an amount of the mixture of organic waste and water 5 corresponding to the sum of the amount that is continuously transferred to the crude oil production tank 40, and the amount of treated water discharged from discharge port 34.

As it is apparent from the description above, in an embodiment of the invention the process is advantageously associated to an apparatus comprising a combustion step that produces hot exhaust gases, such as power plants based on combustion of fuel, plants comprising furnaces, flares of petrochemical industries, and the like.

According to another aspect, the present invention concerns an apparatus for carrying out the process for producing crude oil from organic waste, as described above.

This apparatus comprises a precursor production tank 10, provided with an inlet 7 for introducing a dispersion of organic waste in water, or the solid part and water separately. An outlet 12 allows withdrawing a dispersion of organic waste in water formed in tank 10, and a pump 9 is mounted on a line that withdraws the dispersion from tank 10. A filter 8 is mounted upstream pump 9. Tank 10 is provided also with an inlet 29 for recycling the dispersion of organic waste into tank 10, and with a line 36 for withdrawing a layer of hydrocarbonaceus active material from tank 10. Tank 10 is provided also with heating means 6, and a discharge port 34.

A gas-liquid mixer 18 is associated to precursor production tank 10. Gas-liquid mixer 18 is connected to a line 14 for introducing a dispersion of organic waste in water, which in turn is provided with spray nozzles 16. Gas-liquid mixer 18 is also provided with an inlet for a gas stream 20. According to an embodiment of the invention, gas-liquid mixer 18 is mounted above the precursor production tank 10.

The apparatus comprises also a storage tank 38 for the hydrocarbonaceus active material produced in the precursor production tank 10.

The apparatus of the invention comprises also a crude oil production tank 40 with an inlet 42 for introducing a dispersion of organic waste in water; an inlet for introducing a layer of hydrocarbonaceus active material; an agitator 44; heating means 48, and a discharge port 49 for crude oil formed in said second conversion tank. A cooling tank 50 is connected to conversion tank 40 via conduit 49, to receive the crude oil and allow it to cool down at ambient temperature.

The apparatus described above is advantageously used to carry out the process of the invention.

The examples below illustrate some embodiments of the invention and are provided only by way of non-limiting example.

### Example 1

A pilot plant apparatus according to the scheme shown in Fig. 1 was used to convert into crude oil an organic waste formed by raw sewage 5 from urban network.

With reference to Fig. 1, the raw sewage 5 was introduced into the precursor conversion tank 10 via the inlet port 7, which was then closed. The precursor conversion tank 10 had a volume of 100L and was filled with 60 L of raw sewage. The process was operated batch-wise, i.e., no additional sewage was introduced in tank 10 until the end of the operation. The raw sewage was heated to a temperature in the range from 50 to 60°C, and about 1/10 of the volume of the sewage was continuously withdrawn from tank 10 and continuously transferred to the gas-liquid mixer 18, having a volume of 15L.

A stream of exhaust gas released from a standard single cylinder 4-stroke spark-ignition gasoline engine, with a displacement capacity of 420 CC, was introduced into the gas-liquid mixer 18, after having been cooled to about 120°C in a water cooler 22. A dispersion of organic matter formed by the raw sewage was withdrawn from tank 10, continuously sprayed into the gas-liquid mixer and mixed with the exhaust gas. The unreacted dispersion and the product of reaction were continuously recycled to the conversion tank 10. The process was carried for 20 minutes. No product of reaction was discharged from tank 10 besides the portion of dispersion circulated to the gas-liquid mixer 18 and recycled back to tank 10.

At the end, the raw sewage was converted into water substantially purified from the organic matter, and into a hydrocarbonaceous active material 30, which formed a layer of light fluid floating above the surface of water. Solid particles of tar 32 were also formed and remained suspended in the water phase of the dispersion or deposited on the bottom of tank 10. Purified water was drained via discharge port 34.

The following mixture was then introduced into the crude oil production tank 40:
75 wt% of the new raw sewage 45;
5 wt% hydrocarbonaceous active material 30 withdrawn from the precursor production tank 10;
20 wt% tar particles 32 withdrawn from the first conversion tank 10.

In the crude oil production tank 40 the process was again operated batch-wise. The mixture above was heated to 100-110°C and mixed under stirring at a speed of 15 rpm for 10 minutes. Under these conditions the hydrocarbonaceous active material 30 acted as a promoter of the formation of crude oil and converted the raw sewage into crude oil. At the end of this second treatment a crude oil was obtained. It was transferred to the cooling tank 50 and allowed to cool down to ambient temperature. The crude oil had the composition shown in the analysis report of Table 1.

**Table 1**

| **Parameters** | **Method** | **Unit** | **Result** |
|---|---|---|---|
| Density at 60° F | ASTM D 4052 | g/cm³ | 0.8801 |
| API Gravity at 60° F | IP 365 | °API | 29.11 |
| Total Acid Number | ASTM D 664 | mgKOH/g | 8.2 |
| Ash content | ASTM D 482 | %wt | 0.227 |
| Asphaltene Content | IP 143 | %wt | <0.50 |
| BS & Water | ASTM D 4007 | %vol | 0.75 |
| Flash Point | ASTM D 93 | °C | <0 |
| Hydrogen Sulphide | UOP 163 | ppm wt | <1 |
| Mercaptan Sulphur | UOP 163 | ppm wt | <3 |
| Nickel | IP 501 | mg/kg | <1 |
| Vanadium | IP 501 | mg/kg | 2 |
| Mercury Content | ASTM D 938 | ppb wt | 5.5 |
| Total Nitrogen | ASTM D 5762 | ppm | 193 |
| Salt Content | ASTM D 3230 | ptb | 50 |
| Reid Vapour Pressure at 100°F | ASTM D 323 | psi | 0.78 |
| Pour Point | ASTM D 97 | °C | +3 |
| Sediment by Extraction | ASTM D 473 | %wt | 0.16 |
| Sulphur Content | ASTM D 4294 | %wt | 0.21 |
| Wax Content | UOP 46 | %wt | 5.5 |
| Kinematic Viscosity at 30°C | ASTM D 445 | cSt | 16.80 |
| Kinematic Viscosity at 50°C | ASTM D 445 | cSt | 9.91 |
| Kinematic Viscosity at 70°C | ASTM D 445 | cSt | 6.35 |
| Kinematic Viscosity at 90°C F | ASTM D 445 | cSt | 4.06 |
| Kinematic Viscosity at 120°C | ASTM D 445 | cSt | 2.66 |
| Density at 30°C | ASTM D 4052 | g/cm³ | 0.8699 |
| Density at 50°C | ASTM D 4052 | g/cm³ | 0.8562 |
| Density at 70°C | ASTM D 4052 | g/cm³ | 0.8423 |
| Density at 90°C | ASTM D 4052 | g/cm³ | 0.8284 |
| Density at 120°C | ASTM D 4052 | g/cm³ | 0.874 |
| **Distillation** | | | |
| IBP | ASTM D 86 | °C | 88.0 |
| 5% Volume Recovery Temp | ASTM D 86 | °C | 189.0 |
| 10% Volume Recovery Temp | ASTM D 86 | °C | 244.0 |
| 20% Volume Recovery Temp | ASTM D 86 | °C | 276.0 |
| 30% Volume Recovery Temp | ASTM D 86 | °C | 293.0 |
| 40% Volume Recovery Temp | ASTM D 86 | °C | 321.0 |
| 50% Volume Recovery Temp | ASTM D 86 | °C | 326.0 |
| 60% Volume Recovery Temp | ASTM D 86 | °C | 334.0 |
| Total Recovery | ASTM D 86 | %vol | 64.0 |

### Example 2

A pilot plant apparatus as described in Example 1 was used to convert into crude oil a mixture of organic waste containing water.

60L of a mixture of organic waste having the composition reported below were introduced into the precursor production tank 10, having a volume of 100L:
80 wt% sewage from urban network;
13 wt% rat carcasses, meat trims, dead fish and fish parts;
7 wt% animal and human hair.

The mixture was introduced into the precursor production tank 10 via inlet port 7, which was then closed and the process was operated batch-wise. The mixture was heated to a temperature in the range from 50 to 60°C and a dispersion of organic matter in water was formed. About 1/10 of the volume of the dispersion was continuously withdrawn from tank 10 and continuously transferred to the gas-liquid mixer 18, having a volume of 15L.

A stream of exhaust gas released from a standard single cylinder 4-stroke spark-ignition gasoline engine, with a displacement capacity of 420 CC, was introduced into the gas-liquid mixer 18, after having been cooled to about 120°C in a water cooler 22. The dispersion coming from tank 10 was continuously sprayed into the mixer and mixed with the exhaust gas, then continuously recycled to the conversion tank 10. The process was carried for 20 minutes.

At the end of this step, a layer of hydrocarbonaceous active material 30, in the form of a light fluid, was floating above the surface of water, which was substantially purified from the organic matter. Solid particles of tar 32 were formed and remained suspended in the water phase or deposited on the bottom of tank 10. Purified water was drained via discharge port 34. The following mixture of organic waste was then introduced into the crude oil production tank 40:
72 wt% of a mixture of organic waste containing:
   80 wt% sewage from urban network
   13 wt% rat carcasses, meat trims, dead fish and fish parts;
   7 wt% animal and human hair.
3 wt% hydrocarbonaceous active material from the precursor production tank 10;
25 wt% tar particles withdrawn from the precursor production tank 10.

The mixture was heated to 100-110°C and mixed under stirring at a speed of 15 rpm for 10 minutes. The product obtained was a crude oil that was then transferred to the cooling tank 50 and allowed to cool down to ambient temperature. The obtained crude oil had the features shown in the technical report of Table 2.

The report shows the results of the distillation test is according to ASTM D 86, which covers the atmospheric distillation of petroleum products using a laboratory batch distillation unit to determine quantitatively the boiling range characteristics of such products as light and middle distillates, automotive spark-ignition engine fuels with or without oxygenates, aviation gasolines, diesel fuels, kerosene and the like.

**Table 2**

| **Parameters** | **Method** | **Unit** | **Result** |
|---|---|---|---|
| **Distillation** | | | |
| IBP | ASTM D 86 | °C | 184.0 |
| 5% Volume Recovery Temp | | | 220.0 |
| 10% Volume Recovery Temp | ASTM D 86 | °C | 235.0 |
| 20% Volume Recovery Temp | ASTM D 86 | °C | 256.0 |
| 30% Volume Recovery Temp | ASTM D 86 | °C | 271.0 |
| 40% Volume Recovery Temp | ASTM D 86 | °C | 285.0 |
| 50% Volume Recovery Temp | ASTM D 86 | °C | 295.0 |
| 60% Volume Recovery Temp | ASTM D 86 | °C | 307.0 |
| 70% Volume Recovery Temp | ASTM D 86 | °C | 321.0 |
| 80% Volume Recovery Temp | ASTM D 86 | °C | 333.0 |
| Cracked at | ASTM D 86 | °C | 339.0 |
| Total Recovery | ASTM D 86 | %vol | 89.0 |
| Residue | ASTM D 86 | %vol | 10.0 |
| Loss | ASTM D 86 | %vol | 1.0 |

### Example 3

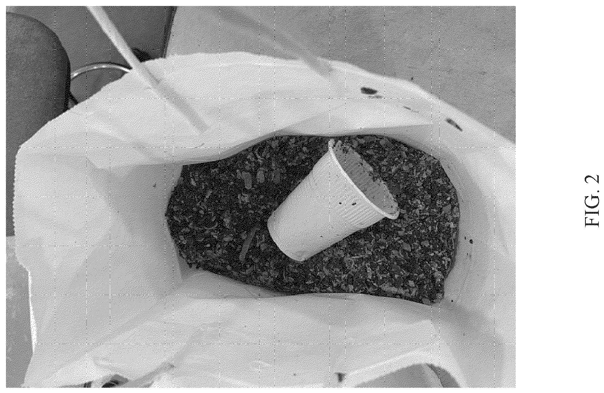

A pilot plant apparatus as described in Example 1 was used to convert into crude oil a mixture of organic waste containing plastics, having the following composition:
- 75 wt% of:: shredded PET bottles, shredded polyethylene and polypropylene bags and containers, as shown in Fig. 2;
- 25 wt%:: sewer water, discharged from a municipal sewage treatment plant

The mixture was introduced into precursor production tank 10 via inlet port 7, which was then closed and the process was operated batch-wise. The mixture was heated to a temperature in the range from 50 to 60°C and about 1/10 of the volume of the formed dispersion was continuously withdrawn from tank 10 and continuously transferred to the gas-liquid mixer 18, having a volume of 15L.

A stream of exhaust gas released from a standard single cylinder 4-stroke spark-ignition gasoline engine, with a displacement capacity of 420 CC, was introduced into the gas-liquid mixer 18, after having been cooled to about 120°C in a water cooler 22. The dispersion coming from tank 10 was continuously sprayed into the mixer and mixed with the exhaust gas, then continuously recycled to the conversion tank 10. The process was carried for 20 minutes.

At the end, a layer of hydrocarbonaceous active material 30, in the form of a light fluid, was floating above the surface of water, which was substantially purified from the organic matter. Solid particles of tar 32 were formed and remained suspended in the water phase or deposited on the bottom of tank 10. Purified water was drained via discharge port 34.

The following mixture of organic waste was then introduced into the crude oil production tank 40:
70 wt% of a mixture of organic waste containing:
   75 wt% shredded plastics as defined above:
   25 wt% sewer water.
10 wt% hydrocarbonaceous active material from the precursor production tank 10;
20 wt% tar particles withdrawn from the precursor production tank 10.

The mixture was heated to 100-110°C and mixed under stirring at a speed of 15 rpm for 10 minutes. The product obtained was a crude oil that was then transferred to the cooling tank 50 and allowed to cool down to ambient temperature. A crude oil having the features shown in the technical report of Table 3 was produced. The report is according to the distillation test method ASTM D 1160, which covers the determination, at reduced pressures, of the range of boiling points for petroleum products and biodiesel that can be partially or completely vaporized at a maximum liquid temperature of 400 °C.

**Table 3**

| **Fractions** | **Vapour Temperature, °C** | | **Vol. %** | |
|---|---|---|---|---|
| **Gasoil** | **279-377 °C** | | **5.0** | |
| **VGO** | **377-435 °C** | | **17.0** | |
| | | | | |
| **Test** | **Method** | **Unit** | | **Result** |
| Distillation, IBP | **ASTM D 1160** | **AET °C** | | **279.3** |
| 5% Vol. Recovery Temp. @ 2 mmHg | | | | **337.0** |
| 10% Vol. Recovery Temp. @ 2 mmHg | | | | **409.1** |
| 20% Vol. Recovery Temp. @ 2 mmHg | | | | **432.8** |
| Total Recovery | | **Vol. %** | **22.0** | |

It is noted that the crude oil of Example 1, 2 and 3 have the characteristics of fossil crude oil. It is also noted that comparative tests carried out in a tank 40 at the same conditions and with the same feed of organic waste as described above but without introducing the hydrocarbonaceous active material 30 did not cause a conversion of organic waste into crude oil.

## Claims

1. Process for producing a hydrocarbonaceus active material that is a precursor of crude oil from organic waste, comprising:
a) feeding a mixture of organic waste and water into a precursor production tank and heating said mixture at a temperature from 40 to 80°C, whereby a dispersion of organic matter in water is formed;
b) withdrawing a part of said dispersion from said precursor production tank and feeding it to a gas-liquid mixer;
c) feeding a stream of combustion gas at a temperature of from 80 to 200°C into said gas-liquid mixer and mixing it with said dispersion of organic matter in water, whereby said combustion gas and said organic matter are allowed to react;
d) recycling said dispersion of organic matter in water and the product of said reaction with said combustion gas into said precursor production tank, wherein a floating layer of hydrocarbonaceus active material is formed above said water; and optionally collecting said hydrocarbonaceus active material in a storage tank.

2. Process for producing crude oil from organic waste comprising:
a) feeding a mixture of organic waste and water into a precursor production tank and heating said mixture at a temperature from 40 to 80°C, whereby a dispersion of organic matter in water is formed;
b) withdrawing a part of said dispersion from said precursor production tank and feeding it to a gas-liquid mixer;
c) feeding a stream of combustion gas at a temperature of from 80 to 200°C into said gas-liquid mixer and mixing it with said dispersion of organic matter in water, whereby said combustion gas and said organic matter are allowed to react;
d) recycling said dispersion of organic matter in water and the product of said reaction with said combustion gas into said precursor production tank, wherein a floating layer of hydrocarbonaceus active material is formed above said water; and optionally collecting said hydrocarbonaceus active material in a storage tank;
e) withdrawing said hydrocarbonaceus active material from said precursor production tank or from said storage tank and feeding it to a crude oil production tank, wherein said hydrocarbonaceus active material is mixed with a fresh organic waste and water;
f) heating said mixture of said hydrocarbonaceus active material and said fresh stream of organic waste and water at a temperature from 60 to 180°C, whereby said mixture of hydrocarbonaceus active material and said fresh organic waste in water are converted into crude oil.

3. Process according to claim 2, **characterized by** comprising a step g) in which said crude oil is allowed to cool down at ambient temperature.

4. Process according to any preceding claim, **characterized in that** the operations of steps a), b) and c) are carried out for a total time of from 3 to 30 minutes, preferably from 5 to 20 minutes.

5. Process according to any preceding claim, **characterized in that** said part of dispersion of organic matter in water which is withdrawn from said precursor production tank in said step b) is from 1:20 to 1:2, preferably from 1:10 to 1:3, of the amount of dispersion of organic matter in water contained in said precursor production tank.

6. Process according to any preceding claim, **characterized in that** amount of said hydrocarbonaceus active material introduced in said crude oil production tank in said step e) is from 1 to 10% by volume, preferably from 2 to 8% by volume, more preferably from 3 to 6% by volume, of said total fresh stream of organic waste in water.

7. Process according to any preceding claim, **characterized in that** said organic waste is a solid and said mixture of organic waste and water to be processed in said precursor production tank is formed by mixing said solid organic waste with water according to a ratio of organic waste to water of from 0.8 to 1.2, preferably at a ratio of 1:1

8. Apparatus for carrying a process for producing a precursor of crude oil from organic waste and crude oil using said precursor, comprising:
i. a precursor production tank (10) provided with an inlet (7) for introducing organic waste and water; an outlet for a dispersion of organic waste in water; pumping means (9) for said dispersion of organic waste in water; an inlet (29) for recycling said dispersion of organic waste in water; a line for withdrawing a layer of hydrocarbonaceus active material; heating means (6), and a discharge port (34);
ii. a gas-liquid mixer (18) associated to said first conversion tank (10), connected to a line (14) for introducing said dispersion of organic waste in water, and spray nozzles (16) to spray said dispersion of organic waste in water into said gas-liquid mixer (18); and an inlet for a gas stream (20);
iii. a crude oil production tank (40) with an inlet (42) for entering a fresh dispersion of organic waste in water; an inlet for introducing said a layer of hydrocarbonaceus active material withdrawn from said precursor production tank (10); mixing means (44); heating means (48); and a discharge port (49) for a crude oil formed in said crude oil production tank (40).

9. Apparatus according to claim 7, **characterized by** comprising a cooling tank (50) connected to said crude oil production tank (40) via a conduit (49), to receive said crude oil and allow it to cool down at ambient temperature.

10. Apparatus according to any claim 7 and 8, **characterized by** comprising a filter (8) mounted upstream said pumping means (9).

11. Apparatus according to any claim 7 - 9, **characterized in that** said gas-liquid mixer (18) is mounted above said precursor production tank (10).
